Europäisches Patentamt

European Patent Office

Office européen des brevets

(19)

(11) Veröffentlichungsnummer: **0 226 981**
**B1**

(12) **EUROPÄISCHE PATENTSCHRIFT**

(45) Veröffentlichungstag der Patentschrift:
28.02.90

(21) Anmeldenummer: 86117356.5

(22) Anmeldetag: 12.12.86

(51) Int. Cl. ⁵: **G 01 M 17/04**

(54) Verfahren und Vorrichtung zur Überprüfung des Fahrwerks eines Kraftfahrzeuges.

(30) Priorität: 19.12.85 DE 3545087

(43) Veröffentlichungstag der Anmeldung:
01.07.87 Patentblatt 87/27

(45) Bekanntmachung des Hinweises auf die Patenterteilung:
28.02.90 Patentblatt 90/09

(84) Bennante Vertragsstaaten:
AT BE CH DE FR GB IT LI LU NL SE

(56) Entgegenhaltungen:
DE-A-2 046 373
DE-A-2 211 540
DE-A-2 335 886
DE-A-2 362 661

(73) Patentinhaber: Richard Langlechner GmbH
Mauerberger Strasse 15
D-8261 Unterneukirchen (DE)

(72) Erfinder: Fernböck, Josef
Stethelmerstrasse 11
D-8265 Neuötting (DE)

(74) Vertreter: Seidel, Herta, Dipl.-Phys.
Siedlungsstrasse 3
D-8267 Lohkirchen Lkrs. Mühldorf/Inn (DE)

LIBERGRAF, STOCKHOLM 1990

**Beschreibung**

Die Erfindung betrifft ein Verfahren zur Überprüfung des Fahrwerkzustandes eines Kraftfahrzeuges, bei dem das Kraftfahrzeug auf eine im Abstand über einer Unterlage angeordnete Auffahrhalterung gebracht und anschließend die Auffahrhalterung entfernt wird, sowie eine Vorrichtung zur Durchführung des Verfahrens

Bekanntlich ist es wünschenswert, zur Beurteilung der Fahrtüchtigkeit eines Kraftfahrzeuges den Zustand der Stoßdämpfer, der Federung sowie der Achsgelenke zu überprüfen.

In der Praxis ist die gebräuchlichste Methode zur Feststellung eines Defektes eines Stoßdämpfers, das Fahrzeug von Hand zu wippen, um dann aus dem Schwingungsverhalten des Fahrzeuges auf den Zustand des Stoßdämpfers zu schließen. Hierbei handelt es sich um eine rein subjektive Methode, die auf der Erfahrung des Mechanikers beruht und keinen Anspruch auf Genauigkeit machen kann.

Aus diesem Vorgehen wurde eine Prüfmethode abgeleitet, die es erlaubt, einen Vergleich des Zustandes des Stoßdämpfers mit demjenigen einwandfreier Stoßdämpfer zu ziehen.

Bei dieser Prüfmethode wird das Kraftfahrzeug auf eine Halterung einer über den Boden überhöhten Plattform gefahren. Nach Lösung der Halterungsarretierung durchfällt das Kraftfahrzeug die Höhendifferenz zwischen Plattform und Boden. Dabei wird die Karosserie zu Schwingungen angeregt, deren Verlauf über ein mit der Karosserie verbundenes Meßgestänge aufgezeichnet wird. Hierdurch läßt sich im wesentlichen nur eine Aussage über den Fahrkomfort des Kraftfahrzeugs gewinnen, da bei dem Versuch das Verhalten der Karosserie bei Veränderungen der Straßenoberfläche simuliert wird. Eine Aussage über Eigenschaften des Stoßdämpfers ist aber nur sekundär möglich, da hier nur ein Vergleich des Schwingungsverlaufes mit listenmäßig von den Stoßdämpferherstellern zusammengestellten Daten einwandfreier Stoßdämpfer vorgenommen wird. Dies ist aber nicht dazu geeignet, den tatsächlichen Zustand des zu überprüfenden Stoßdämpfers abzuschätzen und ausreichend genaue Aufschlüsse über den Zustand eines Stoßdämpfers zu geben.

Insbesondere ist das beschriebene Verfahren nicht zur Beurteilung der Stoßdämpfer bei Einzelradaufhängung geeignet. Während des freien Falles durchläuft hier das Rad aufgrund der Federkraft zwischen Karosserie und Radachse eine kreisbogenförmige Bahn, deren Verlauf durch die im Gelenk gelagerte Radachse als Radius bestimmt ist. Das Rad trifft daher in einer gegen die Vertikale verschwenkten Stellung auf den Boden auf. Dies führt zu einer gewissen Verklemmung des Federsystems, so daß dieses nicht mehr frei schwingen kann. Bei dieser Meßmethode kann man somit nicht das tatsächliche bei der Fahrt vorliegende Schwingungsverhalten des Kraftfahrzeuges nachahmen, was aber bei einer Überprüfung der Stoßdämpfer eine notwendige Voraussetzung für eine richtige Beurteilung der Meßergebnisse ist.

Auch erlaubt die bekannte Prüfmethode keine Differenzierung zwischen dem Verhalten des Stoßdämpfers, den Dämpfungseigenschaften des Achsgelenkes und dem Verhalten der Radschwingungen im Vergleich zu den Karosserieschwingungen. Es handelt sich vielmehr um eine Pauschalaussage über das Zusammenwirken der vorstehend genannten Schwingungseinflüsse, also wie vorstehend bereits gesagt, um eine Pauschalbewertung des Fahrkomforts, die zu Unrecht als Beurteilung des Stoßdämpfers bezeichnet wird, da das Verhalten des Stoßdämpfers nur minimal in die Meßergebnisse eingeht. Da bei der vorstehend beschriebenen Methode darüber hinaus auch noch die Beladung des Kraftfahrzeuges und sein Tankinhalt in das Meßergebnis eingehen, ist die Zuverlässigkeit der Beurteilung noch mehr in Frage gestellt.

Aus der DE-OS-2 046 373 ist eine Vorrichtung zur Stoßdämpferprüfung bekannt bei der nach dem Entriegeln der Hebevorrichtung für ein Fahrzeugrad das Rad gemeinsam mit seiner Unterlage hinunterfällt. Durch einen Meßzeiger wird die Relativbewegung zwischen Karosserie und Rad beim Entspannen der Aufhängungsfeder unter Wirkung des Stoßdämpfers aufgezeichnet. Die Kraft der sich entspannenden Aufhängungsfeder wirkt aber nicht auf das Rad des Kraftfahrzeuges allein, sondern auf die Masse des Rades plus der Masse der sich ebenfalls nach unten bewegenden Unterlage. Hierdurch wird das Meßergebnis hinsichtlich der Funktionsfähigkeit des Stoßdämpfers in nicht bestimmbarer Weise beeinflußt.

Auch bei der in der DE-OS-2 335 886 beschriebenen Vorrichtung wird es nicht ermöglicht, daß die Schwingungen der Räder und der Karosserie entsprechend der freigesetzten Federkraft des Stoßdämpfers erlaufen, da auch hier das Fahrzeug gemeinsam mit seiner Unterlage abwärts bewegt wird.

Aufgabe der vorliegenden Erfindung ist nun, ein Verfahren anzugeben, welches es erlaubt, den Zustand des Stoßdämpfers, die Eigenschaften der Achsgelenke und das Verhalten der Radschwingungen in einem ihrem Verhalten während der Fahrt angeglichenen Zustand jeweils für sich zu erkennen und eine Vorichtung zur Durchführung dieses Verfahrens anzugeben.

Gemäß der Erfindung wird bei einem Verfahren nach dem Oberbegriff das Anspruchs 1:

1.  der Abstand zwischen der Auffahrhalterung und der Unterlage, welcher der Fallhöhe des Kraftfahrzeuges, d. h. der Fallhöhe seiner Vorder- bzw. Hinterachse entspricht, so gewählt, daß er im wesentlichen dem durch die Konstruktion des Kraftfahrzeuges vorgegebenen Restausfederungsweg, also dem Abstand zwischen Radachse und einem Pufferanschlag, entspricht, diesen jedoch nicht übersteigt,

2.  die Auffahrhalterung mindestens so schnell entfernt, wie das oder die jeweils zu prüfenden Räder des Kraftfahrzeugs unter Wirkung der Schwerkraft und zusätlicher Wirkung der zwischen Rad und Karosserie befindlichen, sich entspannenden Feder, unter Vernachlässigung der entgegengesetzt gerichteten Wirkung des Stoßdämpfers und der Reibungskräfte, beispielsweise im Achsgelenklager und in den Federn, fallen würden und

3. der zeitliche Verlauf der auf die Unterlage einwirkenden Kraft gemessen.

Dabei ist die unter Ziff. 2 genannte Verfahrensweise von besonders großer Bedeutung für die Richtigkeit der erhaltenen Meßergebnisse. Sobald die Halterung unter dem Kraftfahrzeug weggezogen wird, können sich die im Fahrzeug vorhandenen Federkräfte frei entfalten. Dies heißt, daß sich die zwischen der Karosserie und dem Rad befindliche Feder, die bei auf der Halterung ruhendem Fahrzeug aufgrund des Fahrzeuggewichtes zusammengedrückt ist, entspannen kann und dabei die durch die Erdbeschleunigung bestimmte Fallgeschwindigkeit der Räder erhöht. Da die Radmasse im Verhältnis zur Masse der Karosserie sehr klein ist, wirkt sich die Federentspannung praktisch vollständig auf die Räder aus und erteilt diesen eine zusätzliche Beschleunigung, deren Höhe jedoch von dem Zustand der Stoßdämpfer und der Achsgelenke abhängt. Das heißt, die Räder eilen der Karosserie voraus, treffen auf die Unterlage auf und erteilen dieser ihre Schwingungen, bevor noch die Masse der Karosserie in den Schwingungsvorgang miteingeht.

Durch das Vorauseilen der Räder aufgrund der auf sie wirkenden freigesetzten Federkräfte gegenüber der Karosserie verändert sich der Abstand der Räder von der Karosserie. In jedem Kraftfahrzeug sind zur Verhinderung zu großer Schwingungsauslenkungen der Räder Anschlaggummipuffer vorgesehen. Würde die Achse des der Karosserie voreilenden Rades vor seinem Auftreffen auf die Unterlage bereits an den Anschlaggummipuffer anschlagen, so würde das Schwingungsverhalten des Rades sowie der sich entspannenden Feder zwischen Karosserie und Rad durch die vom Anschlagpuffer ausgeübte, in Gegenrichtung wirkende Kraft beeinflußt und das erhaltene Schwingungsergebnis stellte eine verfälschte Aussage über das Schwingungsverhalten des Fahrzeuges bzw. die Wirkung seines Stoßdämpfers dar. Außer dem würde bei einem solchen Anschlagen der Radachse an dem Anschlaggummipuffer ein Teil der dem Rad durch die Feder erteilten Schwingungsenergie vernichtet, noch bevor das Rad auf die Unterlage auftrifft und die Feder könnte nicht ihren vollen Weg zurücklegen.

Bei der Beurteilung des gemessenen Schwingungsverhaltens führte dies jedoch zu dem fehlerhaften Schluß, daß dem im Fahrzeug befindlichen Stoßdämpfer, dessen Aufgabe es ist, die Schwingungsbewegung der Feder zu dämpfen, also ebenfalls Energie der Feder zu vernichten, eine Leistungsfähigkeit zugesagt würde, die er in Wirklichkeit gar nicht hat.

Um zu vermeiden, daß die Radachse vor ihrem Auftreffen auf die Unterlage an dem Anschlagpuffer aufschlägt, muß man dafür sorgen, daß die Fallhöhe, d. h. der Abstand zwischen der Auffahrhalterung und der Unterlage einen bestimmten maximalen Wert nicht überschreitet, der dem sogenannten Restausfederungsweg entspricht.

Dieser Wert ergibt sich aus der Praxis und aus den von den Fahrzeugherstellern angegebenen Konstruktionsbedingungen. Danach soll der sogenannte Restausfederungsweg bei jedem Fahrzeug mindestens 50 mm betragen, wenn sich kein Fahrer im Fahrzeug befindet. Ist aber ein Fahrer im Fahrzeug, so vergrößert sich der Restausfederungsweg, der Abstand zum Anschlagpuffer wird durch das Eigengewicht des Fahrers größer. Es wird hierdurch ein gewisses Sicherheitspolster geschaffen, durch das vermieden werden kann, daß die Achse auf den Anschlagpuffer aufschlägt bevor das Rad die Unterlage erreicht.

Sind die vorstehend genannten Kriterien bei dem Verfahrensablauf eingehalten, so kann man aus den, die Radkraft auf die Unterlage wiedergebenden Meßergebnissen durch entsprechende Kurvenanalyse folgende Aussagen machen, ohne die einzelnen Komponenten aus dem Fahrzeug ausbauen zu müssen, nämlich

1. entscheiden, ob es sich um eine Einzelradaufhängung oder um eine Starrachse handelt,
2. das Verhältnis zwischen Radgewicht und Karosseriegewicht bestimmen,
3. eine Aussage über das Federverhalten des Reifens (Niederquerschnittsreifen, Luftdruckverhältnisse im Reifen) machen,
4. Dämpfungseigenschaften der Achsgelenke feststellen,
5. eine Aussage über die Güte des Stoßdämpfers machen,
6. eine Aussage über den Fahrkomfort machen,
7. eine Aussage über die Federhärte des Kraftfahrzeuges machen,
8. eine Aussage über das Verhältnis von Zugzu Druckeigenschaften des Stoßdämpfers machen,
9. eine Aussage über die Zuladefähigkeit des Kraftfahrzeuges machen und
10. eine Aussage über das eventuelle Vorliegen einer Verklemmung des Stoßdämpfers machen.

Die zur Durchführung des erfindungsgemäßen Verfahrens geeignete Vorrichtung zur Überprüfung des Fahrwerkzustandes eines Kraftfahrzeuges mit einer im Abstand über einer Unterlage angeordneten, unter dem aufgefahrenen Kraftfahrzeug entfernbaren Auffahrhalterung so daß das Kraftfahrzeug mit seiner Vorder- bzw. Hinterachse im freien Fall auf die Unterlage auffält und mit einer Meßvorrichtung zur Bestimmung des Fahrzeuggewichtes und der auf die Unterlage wirkenden Radkraft ist dadurch gekennzeichnet, daß die Unterlage als Meßbrücke ausgebildet ist, mit der das Fahrzeuggewicht und der zeitliche Verlauf der Radkraft bestimmbar ist und daß der Abstand der Fahrzeughalterung von der Unterlage im wesentlichen der durch den Restausfederungsweg des Kraftfahrzeuges vorgegebenen Strecke entspricht, diese jedoch nicht übersteigt.

Weitere Einzelheiten ergeben sich aus den in den abhängigen Ansprüchen aufgeführten Merkmalen sowie aus der nachstehenden Beschreibung eines Ausführungsbeispieles anhand der Zeichnung.

Hierin zeigen

Fig. 1   eine Prinzipdarstellung eines Fahrwerkaufbaues,

Fig. 2   eine Seitenansicht einer schematischen Darstellung der Meßbrücke,

Fig. 3   eine federnde Lagerung der Meßbrücke nach Fig. 2,

Fig. 4   ein Diagramm, in welchem die von dem Rad mit der Masse $m_2$ beziehungsweise von der Karosserie mit der Masse $m_1$ nach Auslösen des Falles des Kraftfahrzeuges zurückgelegten Wege in Abhängigkeit von der Zeit dargestellt sind.

Fig. 5   ein Blockdiagramm, in welchem die Beanspruchung des Stoßdämpfers (Zug-/Druck) während und nach dem Fall des Kraftfahrzeuges in Abhängigkeit von der Zeit gezeigt ist,

Fig. 6a   ein Diagramm, in welchem das Schwingungsverhalten des Gesamtbodendruckes der Unterlage nach Auftreffen eines Kraftfahrzeuges mit harter Fahrzeugfederung und ein Diagramm, in dem

Fig. 6b   das Schwingungsverhalten des Gesamtbodendruckes der Unterlage nach dem Auftreffen eines Kraftfahrzeuges mit weicher Fahrzeugfederung aufgetragen ist.

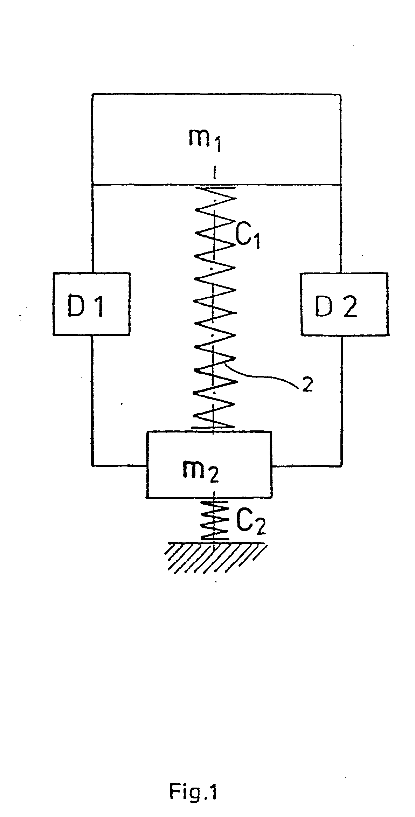

Bei den z. Zt. im Straßenverkehr bekannten Kraftfahrzeugen ist eine im Prinzip übereinstimmende Einzelradaufhängung üblich. Es ist daher zulässig, ein Kraftfahrzeug durch die in Fig. 1 dargestellte Prinzipdarstellung zu vereinfachen, die es erlaubt, die erfindungsgemäße Methode besser zu erläutern.

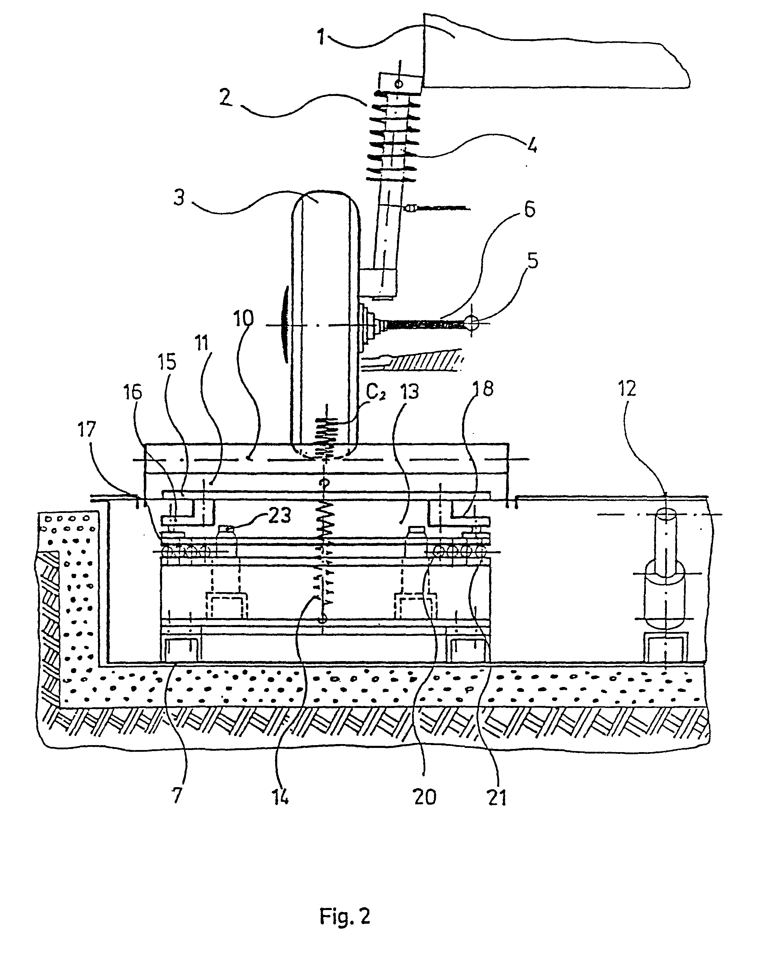

Mit $m_1$ ist die Masse einer Karosserie 1 eines in Fig. 2 in abgebrochener Darstellung gezeigten Kraftfahrzeuges bezeichnet. Die Karosserie 1 mit der Masse $m_1$ ist über eine Feder 2 mit der Federkraft $c_1$ mit einem Rad 3 mit der Masse $m_2$ verbunden. Durch $c_2$ ist die dem Rad 3 eigene Federkraft, die sich durch den Reifendruck und die Reifenart bestimmt, bezeichnet. Die Schwingung der Feder 2 und der Masse $m_2$ wird durch einen Stoßdämpfer 4 gedämpft, dessen Dämpfungskraft in der Zeichnung durch die zwischen $m_1$ und $m_2$ parallel zur Federkraft $c_1$ vorgesehene

Dämpfung $D_2$ wiedergegeben ist. Auch die Reibung in den Gelenken 5 der Radachsen 6 - es handelt sich bei diesem Beispiel um eine Einzelradaufhängung - sowie durch in der Feder 2 während der Schwingungsbewegung auftretende Reibungskräfte, welche in Wärme umgewandelt werden, wird die Schwingungsbewegung der Feder 2 und der Masse $m_2$ gedämpft. Diese Dämpfungskraft ist in Fig. 1 mit der ebenfalls parallel zur Federkraft $c_1$ wirkenden Dämpfungskraft $D_1$ gekennzeichnet.

Das in Fig. 2 schematisch dargestellte und durch die Bezugszeichen 1 bis 6 gekennzeichnete Kraftfahrzeug mit Einzelradaufhängung ruht mit seinem Rad 3 auf einer Auffahrhalterung 10 einer Auffahrrampe 11. Entsprechendes gilt für das nicht dargestellte andere Rad der Achse, da beide Räder gleichzeitig auf die ihnen zugeordneten Meßvorrichtungen fallen, während die anderen beiden Räder während des Meßvorganges auf ihrer Unterlage ruhen. Die Auffahrhalterung 10 ist mit Hilfe eines Hydraulikzylinders 12 in Höhe der Auffahrrampe 11, etwa 50 mm über einer Meßvorrichtung 13 gehalten und über eine Zugvorrichtung 14 mit dem Boden 7 verbunden. Sobald die Kraft des Hydraulikzylinders 12 unterbrochen wird, wird die Halterung 10 mit Hilfe der Zugvorrichtung 14 unter dem Kraftfahrzeug weggezogen. Die Abmessungen der Auffahrhalterung 10 sind so gewählt, daß sie die Außenmaße der Meßvorrichtung 13 übersteigen, so daß sie über die Meßvorrichtung 13 hinweg, an dieser vorbei nach unten gezogen werden kann, ohne diese zu berühren. Die Auffahrhalterung 10 wird durch eine Bremsvorrichtung 23 aufgefangen um sie am Zurückfedern zu hindern, damit die Auffahrhalterung 10 nicht gegen die sich auf der Meßvorrichtung 13 befindlichen Räder 3 zurückschlagen und das Ergebnis verfälschen kann. Die Bremsvorrichtung 23 ist hier durch einen Hydraulikzylinder gebildet. Es können aber auch geeignete entsprechende andere Vorrichtungen gewählt werden.

Jede Meßvorrichtung 13 umfaßt eine als Meßbrücke ausgebildet Wiegeplatte 15, die über beidseitig angeordnete Biegebalken 16 mit L-Profil mit einen Chassis 17 starr verbunden ist. Auf den Biegebalken 16 sind jeweils 2 Dehnungsmeßstreifen 18, längs einer Symmetrielinie des Biegebalkens 16 aufgebracht. Die mit den Dehnungsmeßstreifen 18 gewonnenen Ergebnisse werden mit Hilfe einer nicht dargestellten Aufzeichnungsvorrichtung in Form von Kurven wiedergegeben, die über das Schwingungsverhalten der auf die Wiegeplatte 15 einwirkenden Raddrucke Aufschluß geben. Die Meßwerte der Dehnungsmeßstreifen 18 können über auch einem entsprechend programmierten Computer eingespeist werden, der diese Ist-Werte mit berechneten Soll-Werten vergleicht und die Auswertung über die Güte der Fahrzeugkomponenten vornimmt.

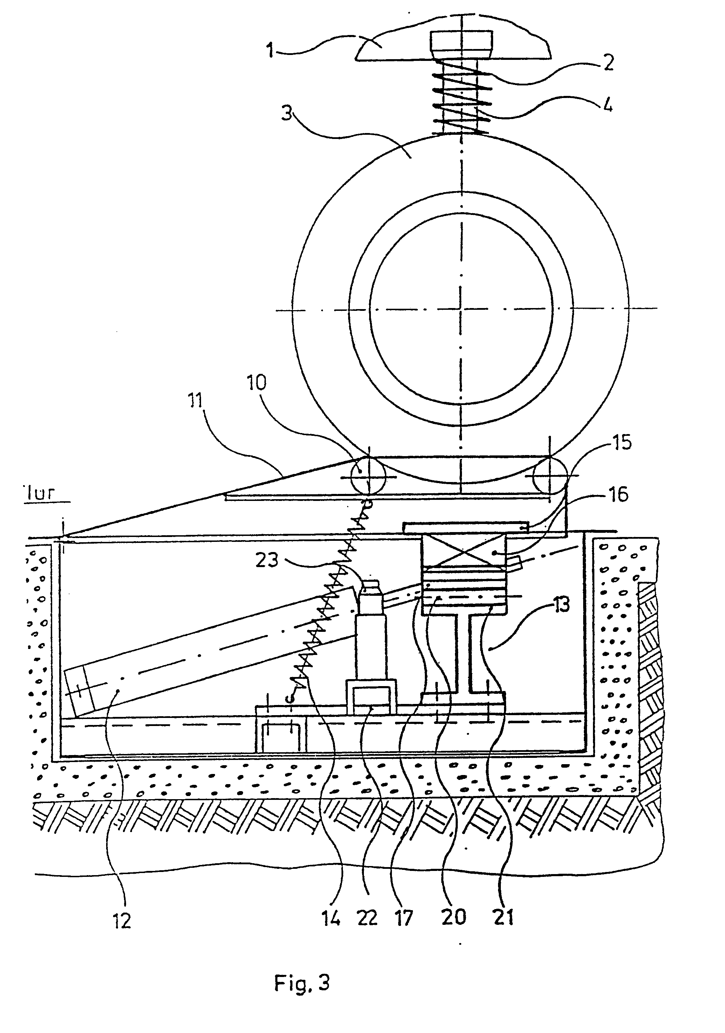

Das Chassis 17 ist beidseitig auf Rollen 20 auf einer Basisplatte 21, in horizontaler Richtung verschieblich, gelagert. Wie aus Fig. 3 ersichtlich, kann die Meßvorrichtung 13 auf einer Feder 22 gelagert sein, die zu Schwingungen angeregt werden kann.

Sobald das Kraftfahrzeug auf die Auffahrrampe 11 aufgefahren ist und seine Räder 3 in der Auffahrhalterung 10 arretiert sind, befindet sich das Kraftfahrzeug etwa 50 mm über der Meßbrücke 13. Der Fahrer kann, um das Meßergebnis möglichst weitgehend an das Fahrverhalten des Kraftfahrzeuges auf der Straße anzugleichen, während des Meßvorganges im Fahrzeug sitzen bleiben. Sobald die Auffahrhalterung 10 nach unten weggezogen wird, unterliegt das Kraftfahrzeug den Gesetzen des freien Falls. Die Bodenunterstützung der Räder 3 einer Fahrzeugachse fällt fort und das sie von oben belastende Gewicht der Karosserie 1 verliert zunächst ebenfalls seine Wirkung auf die Räder. Die Federaufhangung 2 der Räder 3 kann sich entspannen und die Räder 3 beschreiben einen Kreisbogen um die Gelenke 5 mit ihrer Achse 6 als Radius. Hierbei schwenken sich die Räder 3 aus ihrer vertikalen Lage nach innen und treffen in Schräglage auf die Wiegeplatte 15 der Meßbrücke 13 auf. Diese Radstellung würde keinesfalls dem tatsächlichen Fahrverhalten der Räder auf der Straße entsprechen und daher auch das Prüfungsergebnis verfälschen. Dies insbesondere auch deshalb, weil durch die Schräglage der Räder 3 der Stoßdämpfer 4 nicht mehr frei schwingen kann, sondern sich unter Umständen verklemmt. Hierdurch würde das Meßergebnis eine Stärke des Stoßdämpfers 4 vortäuschen, die ihm in Wirklichkeit gar nicht zukommt. Um zu erreichen, daß sich die Räder 3 während der Messung in ihrer vertikalen Lage befinden und um zu ermöglichen, daß auch die Karosserie 1 entsprechend ihrem Fahrverhalten frei nach unten durchschwingen kann, ist die Meßbrücke 13 auf Rollen 20 auf der Unterlage 21 seitlich auslenkbar gelagert. Beim Auftreffen der Räder 3 auf der Wiegeplatte 15, die aufgrund der auf sie ausgeübten Kraft der sich entspannenden Feder 2, der schweren Masse der Karosserie 1 voreilen, befinden sich diese zunächst in einer Schräglage. Sobald jedoch die schwere Masse der Karosserie 1 nachschwingt, richten sich die Räder 3 wieder auf und schieben mit ihrem an der Wiegeplatte 15 haftenden Reifen 3 die Wiegeplatte 15 seitlich nach außen. Durch das Schwingen der Karosserie 1 wird ein wiederholtes Neigen und Aufrichten des Rades 3 bewirkt. Diese Schwingungsbewegung wird von der Wiegeplatte 15 mitgemacht und dient als Kriterium für die Aussage, ob es sich bei dem zu prüfenden Fahrzeug um eine Einzelradaufhängung oder ob es sich um ein Fahrzeug mit starrer Achse handelt. Da z. Zt., abgesehen von ausgesprochenen Geländewagen, nahezu sämtliche Fahrzeuge Einzelradaufhängung haben, ist die Rollenlagerung der Wiegeplatte 15 ein notwendiges Konstruktionsmerkmal der Meßvorrichtung, um nicht durch Verklemmungen, die über den an der Wiegeplatte 15 haftenden Reifen 3 in das Achsgelenk 5 und von hier rückwirkend auf den Stoßdämpfer 4 geleitet werden, Verfälschungen der Meßergebnisse zu erhalten.

Die Meßvorrichtung 13 ist so aufgebaut, daß es gleichgültig ist, an welcher Stelle der Wiegeplatte 15 das Rad 3 beim freien Fall auftrifft. Diese Eigenschaft der Meßvorrichtung 13 ist erforderlich, um Kraftfahrzeuge mit unterschiedlicher Spurbreite und Kraftfahrzeuge mit unterschiedlicher Radauslenkung beim freien Fall untersuchen zu können. Hierzu ist die Wiegeplatte 15 über die Biegebalken 16 auf dem Chassis 17 abgestützt. Sobald das Kraftfahrzeug auf die Wiegeplatte 15 fällt, wird mit dem Dehnungsmeßstreifen 18 durch die sogenannte Differenzmethode dessen Gesamtgewicht, also $m_1 + m_2$, sowie der zeitliche Verlauf der auf die Wiegeplatte 15 ausgeübte Raddruck festgestellt.

Für die Beurteilung der Meßergebnisse muß man sich darüber klar werden, was während des Fallvorganges des Kraftfahrzeuges vor sich geht.

Hierbei kommt der Vorrichtung, durch die das Fallen der Radpaare des Kraftfahrzeuges ausgelöst wird, eine erhebliche Bedeutung zu. Zunächst ruht das Kraftfahrzeug auf der Auffahrhalterung 10, die mit dem Erdboden über eine Zugfeder 14 verbunden ist, und wird mit Hilfe des Hydraulikzylinders 12 in angehobener Stellung über der Meßvorrichtung 13 gehalten. Um das Rad 3 des Kraftfahrzeuges ohne Beeinträchtigung durch äußere Kräfte im freien Fall auf die Wiegeplatte 15 auftreffen zu lassen, muß die Auffahrhalterung 10 möglichst noch schneller unter dem Kraftfahrzeug weggezogen werden, als sich das Rad 3 nach unten zur Wiegeplatte 15 hinbewegt. Die Geschwindigkeit des Rades 3 ist größer als die freie Fallgeschwindigkeit, also auch größer als die Geschwindigkeit der Masse $m_1$ der Karosserie 1, da sich die sehr starke Feder 2, die zunächst durch das Gewicht des Kraftfahrzeuges zusammengedrückt ist, nach Entfernung der Unterlage 10 entspannt und eine starke Druckkraft auf die Räder ausübt. Diese Kraft addiert sich zu der nach unten wirkenden Schwerkraft der Räder 3, so daß diese der trägen Masse $m_1$ der Karosserie 2 voreilen. Sie berühren die Wiegeplatte 15 und übertragen entsprechend ihrem eigenen Schwingungsverhalten sowie unter dem Einfluß der Feder 2 mit Stoßdämpfer 4, unter gleichzeitiger Wirkung der Dämpfung $D_1$, hervorgerufen durch die Achsgelenklagerung und die Reibungsverhältnisse der Feder 2, der Wiegeplatte 15 wechselnde Bodendrucke, die von den Dehnungsmeßstreifen 18 als Schwingung registriert werden. Hierzu sei auf die nachstehend diskutierten Diagramme der Fig. 6a, b, hingewiesen.

Um die Auffahrhalterung 10 schnell genug nach unten zu bewegen, ist sie mit einer entsprechend starken Zugfeder 14 verbunden. Außerdem ist eine Bremsvorrichtung 23 vorgesehen, die ein Zurückfedern der auf sie fallenden Fahrzeughalterung 10 verhindert.

Das vorstehend erwähnte Beschleunigen des Rades 3 durch die Feder 2 wird, wie gesagt, durch den Stoßdämpfer 4 gebremst. Das heißt, die Energie der Feder 2 wird entsprechend der Wirkung des Stoßdämpfer 4 in Wärme umgesetzt. Dies ist seine bestimmungsgemäße Aufgabe. Sinn der Prüfung ist nun, festzustellen, ob der Stoßdämpfer in der Lage ist, diese Aufgabe noch in ausreichen dem Maße zu erfüllen. Dies ist dann der Fall, wenn die durch Entspannung der Feder 2 verursachte Auslenkung des Rades 3 möglichst klein ist. Dann kann der Stoßdämpfer 4 als gut bezeichnet werden.

Die von dem Stoßdämpfer 4 bewirkt Dämpfung wird noch ergänzt durch von den Achsgelenken 5 ausgeübte Reibungskräfte. Diese sind zwar im Normalfall relativ gering und können gegenüber den von dem Stoßdämpfer ausgeübten Kräften vernachlässigt werden, fallen aber dann ins Gewicht, wenn beispielweise durch Unfallschäden im Achsgelenk Reibungen auftreten, die durch Verklemmungen verursachen können. Hierdurch könnte die Beurteilung der Güte des Stoßdämpfers verfälscht werden, da diese Kräfte gleichsinnig mit denen der Stoßdämpfer 4 auf die Feder 2 einwirken.

Ein Fachmann kann jedoch aus dem Aussehen der erhaltenen Meßkurven Rückschlüsse ziehen und die auf die Feder 2 wirkenden Kräfte aus diesen Kurven analysieren.

In den Fig. 6a und 6b sind Diagramme gezeigt, die das Schwingungsverhalten der Wiegeplatte 15 in Abhängigkeit von der Zeit wiederergeben, nach dem die Halterung 10 des auf die Auffahrrampe 11 aufgefahrenen Kraftfahrzeuges unter dessen Rädern 3 weggezogen wurde und das Fahrzeug auf die Wiegeplatte 15 aufgefallen ist. Mit anderen Worten, die Kurven entsprechen dem sich mit der Zeit ändernden Bodendruck, den das auf die Wiegeplatte 15 aufgefallene, nachfedernde Fahrzeug auf die Wiegeplatte 15 ausübt.

Dieser Bodendruck entspricht dem Raddruck, der die von den beiden hintereinander geschalteten Federn $c_1$ und $c_2$ vertikal nach unten auf das Rad 3 ausgeübten Kräfte an die Wiegeplatte 15 überträgt. Die Federn $c_1$ und $c_2$ werden dabei durch die von den frei fallenden Massen $m_1$ und $m_2$ auf sie ausgeübten Kräfte zu Schwingungen angeregt, wobei diese Schwingungen wiederum durch die bereits genannten Dämpfungsfaktoren $D_1$ und $D_2$ beeinflußt werden. Hieraus ergibt sich, daß bei bekannten Werten für die Massen $m_1$ und $m_2$ und bei bestimmtem Reifendruck $c_2$ aus den Messungen für den Bodendruck der Wiegeplatte 15 Rückschlüsse auf den Zustand des gedämpften Federsystems $c_1$, $D_1$, $D_2$ gezogen werden können. Das heißt, man kann aus der Kurvenform beurteilen, ob es sich um ein Federsystem mit harter Feder und hartem und hartem Stoßdämpfer oder um ein weiches Federsystem mit weicher Feder und weichem Stoßdämpfer handelt.

Die in Fig. 6b gezeigt Bodendruckkurve ist typisch für ein weiches Federsystem, die Kurve 6a entspricht einem harten Federsystem.

Um allerdings ins einzelne gehende Rückschlüsse auf den Zustand der im Kraftfahrzeug vorliegenden Bauelemente, nämlich die Feder $c_2$, den Stoßdämpfer $D_2$ und das Achsgelenk 5 gewinnen zu können, ist eine genauere Analyse der Kurvenzüge erforderlich.

Da es sich bei den Kurvenzügen jeweils um Summenkurven handelt, die sich aus Überlagerungen verschiedener Schwingungen ergeben, ist für die Auswertung der Meßergebnisse zunächst allgemein zu überlegen, welche einzelnen Schwingungszüge sich hier überlagern und wie deren Verlauf von dem Zustand der sie bedingenden Faktoren abhängt. Dabei werden die Überlegungen von dem Schwingungsverhalten des Systems $m_2$, $c_2$ und des Systems $m_1$, $c_1$, $D_1$, $D_2$ auszugehen haben, um anschließend das Zusammenwirken der beiden Systeme auswerten zu können.

Sobald der freie Fall des Kraftfahrzeuges ausgelöst wird, entspannen sich die Federn $c_2$ und $c_1$. Die Fallbeschleunigung der Masse $m_2$ wird durch die nach unten auf die Masse $m_2$ wirkende Kraft der sich entspannenden Feder $c_1$ vergrößert, so daß die Masse $m_2$ der Masse $m_1$, die zunächst im wesentlichen nur der Erdanziehungskraft unterliegt, voreilt. Die Größe der kinetischen Energie der Masse $m_2$ beim Auftreffen auf die Wiegeplatte 15 ist ein Maß für die von dem System $c_1$, $D_1$, $D_2$ während des freien Falles auf die Masse $m_2$ ausgeübte Beschleunigungskraft und damit ein Kriterium für die Güte des Stoßdämpfers $D_2$. Ist die Wirkung des Stoßdämpfers $D_2$ auf die Feder $c_1$ nur gering, so kann sich die Feder $c_1$ leicht entspannen, die Beschleunigung der Masse $m_2$ durch die Feder $c_1$ ist sehr groß. Der Aufschlag des Rades 3 auf die Wiegeplatte 15 erfolgt dann sehr schnell nach dem Fallbeginn mit großer Wucht. Der Beginn der Schwingungskurve liegt nahe dem Nullpunkt des Koordinatensystems.

Nach dem Aufschlagen des Rades 3 auf die Wiegeplatte 15 wird jedoch der Reifen durch die stark beschleunigte Radmasse $m_2$ wieder zusammengedrückt, d. h. die die Elastizität des Reifens darstellende Feder $c_2$ wird wieder aufgeladen und beginnt schließlich durch wiederholtes Entladen und Aufladen zu schwingen.

Kann sich die Feder $c_1$ während des freien Falles weit entspannen, so handelt es sich bei dem System $c_1$, $D_2$ um ein relativ weich federndes Schwingungssystem. Die Feder $c_1$ setzt also auch der sich nach dem Radaufschlag wieder entspannenden Feder $c_2$ wenig Widerstand entgegen und die Feder $c_2$ kann am Schwingungsbeginn relativ ungehindert schwingen, wobei das System $c_1$, $D_2$ abwechselnd in Zug- und Druckrichtung beansprucht wird. Entsprechend der Eigendämpfung des Systems $m_2$, $c_2$, das beeinflußt ist durch die Wirkung des Schwingungssystems $m_1$, $c_1$, $D_2$, - die Dämpfung $D_1$ die von dem Achsgelenk ausgeht, soll zunächst vernachlässigt werden, da sie im Regelfall nur gering ist, - klingt diese Schwingung aber doch relativ schnell ab.

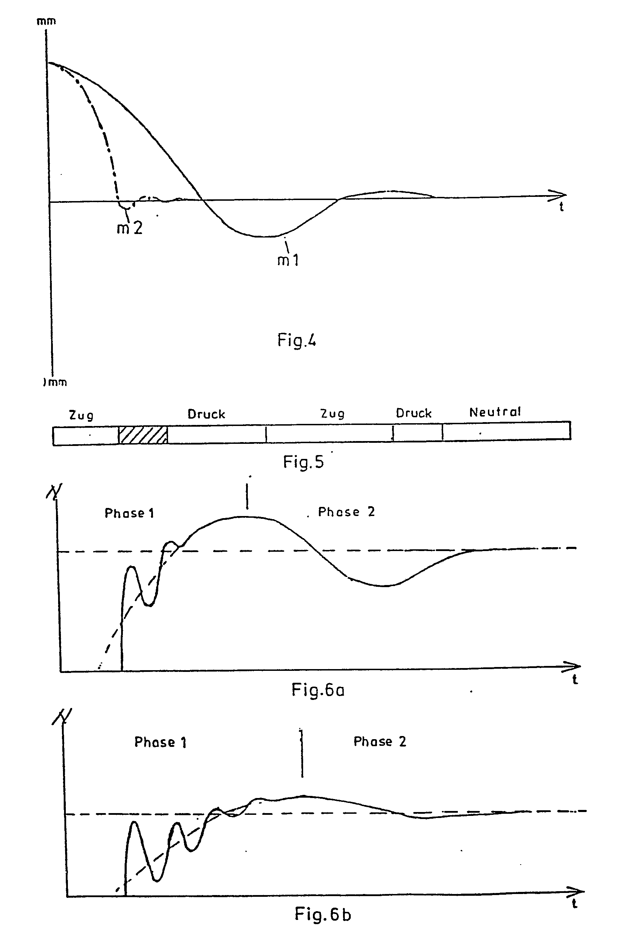

Der Zeitraum, in dem die Massen $m_2$ und $m_1$ gleichzeitig schwingen, ist sehr kurz. Der Stoßdämpfer 4 wird in dieser Zeitspanne abwechselnd auf Zug oder Druck beansprucht. Dieses kurzfristig wechselnde Zug/Druckverhalten des Stoßdämpfers ist aus dem unter der Fig. 4 angedeuteten Blockdiagramm der Fig. 5 ersichtlich. Der in Frage stehende Bereich ist schraffiert gekennzeichnet.

Während sich bis zum Aufschlag des Rades 3 auf die Wiegeplatte 15 auch die Feder $c_1$ entspannen konnte und der Stoßdämpfer $D_2$ demzufolge nur auf Zug beansprucht wurde, ändern sich diese Verhältnisse nach dem Aufschlag des Rades 3. Die Feder $c_1$ wird durch die beschleunigt fallende Masse $m_1$ zusammengedrückt und damit wird auch der Stoßdämpfer $D_2$ nur noch auf Druck beansprucht, nachdem die vorstehend geschilderte Druck/Zugphase des Einschwingvorganges abgeklungen ist. Dieses Schwingungsverhalten entspricht der mit "Phase 2" bezeichneten Zeitspanne der Kurvenzüge der Fig. 6a und 6b.

Das Verständnis des in der Phase 2 der Fig. 6a und 6b gezeigten Kurvenverlaufes dürfte erleichtert werden, wenn man diese Kurven mit dem in Fig. 4 gezeigten Diagramm koordiniert. Hier sind über der Zeit die Wege der Massen $m_1$ und $m_2$ aufgezeichnet, die diese während des Schwingungsvorganges zurücklegen, wobei als Null-Linie für diese Massen die Normallage von Rad und Karosserie gewählt ist. Aus der Bahnkurve für $m_2$ (strichpunktierte Kurve) ist der gegenüber der Masse $m_1$ beschleunigte freie Fall der Masse $m_2$ bis zum Auftreffen des Rades 3 auf die Wiegefläche 15 zu erkennen. Nach dem Aufschlag des Rades 3 drückt sich der Reifen zusammen, das heißt, die beschleunigte Masse $m_2$ drückt die Feder $c_2$ zusammen und die Masse $m_2$ gelangt etwas unter die Null-Linie, also unter ihre Normallage.

Durch die ausgezogene Kurve ist der Weg der Masse $m_1$ dargestellt. Der Kurvenbeginn entspricht dem freien Fall. Ab dem Aufschlagzeitpunkt des Rades 3 wird der freie Fall der Karosserie 1 mit der Masse $m_1$ durch Wirkung der sich nach oben entspannenden Feder $c_1$ etwas verzögert. Die Restbeschleunigung der Masse $m_1$ reicht aber dennoch aus, daß sich die Masse $m_1$ aufgrund der ihr innewohnenden kinetischen Energie über die Null-Linie hinaus nach unten bewegt, wobei die Feder $c_1$ zusammengedrückt wird. Der Umkehrpunkt der Masse $m_1$ liegt unterhalb der Null-Linie. Hier ist die kinetische Energie der Masse $m_1$ aufgebraucht und die in der Feder $c_1$ gespeicherte Energie hat ihr Maximum erreicht. Die durch die Masse $m_1$ zusammengedrückte Feder $c_1$ entspannt sich und drückt die Masse $m_1$ nach oben. Abhängig von der Federstärke des Systems $c_1$, $D_1$, $D_2$, wiederholt sich der beschriebene Schwingungsvorgang und klingt mehr oder weniger schnell ab, wobei der Stoßdämpfer 4 ebenso wie die Feder 2 abwechselnd auf Zug oder Druck beansprucht werden, bis schließlich beide Massen $m_1$ und $m_2$ ihre neutrale Null-Lage erreicht haben. (siehe Blockdiagramm Fig. 5). Nach Kenntnis des Kurvenverlaufes nach Fig. 4 wird auch die zweite Phase des Schwingungsverlaufes des Bodendruckes der Wiegeplatte 15 nach Fig. 6a und 6b verständlich.

Hier beginnt sich die durch die Masse $m_1$ zusammengedrückte Feder $c_1$ wieder zu entspannen, die Masse $m_1$ wird nach oben gedrückt, der Bodendruck nimmt ab. Das Entspannen der Feder $c_1$ wird bei harter Federung $c_1$, $D_2$ sehr schnell erfolgen. Das heißt, die Druckamplitude wird weit unter die gestrichelt eingezeichnete horizontale Linie, die den durch das Realgewicht des Kraftfahrzeuges (statisches Gewicht) gegebenen Bodendruck darstellt, hinausschwingen. Der auf die Wiegeplatte 15 ausgeübte Bodendruck wird also geringer als das statische Gewicht des auf der Wiegeplatte 15 befindlichen Kraftfahrzeuges.

Aus dem Kurvenverlauf für die Massen $m_1$ und $m_2$ nach Fig. 4 läßt sich aber auch erkennen, wie deren Verhalten den Schwingungsverlauf des Bodendruckes nach den Fig. 6a und 6b während der Phase 1 des Einschwingvorganges beeinflußt. Aus dem Schwingungsverhalten der Masse $m_1$ nach Fig. 4 lassen sich die in den Fig. 6a und 6b jeweils gestrichelt eingezeichneten Kurvenabschnitte, die als Grundschwingung bezeichnet werden sollen, extrapolieren.

Der Anstiegswinkel des gestrichelten Kurvenzuges der Fig. 6a und 6b sowie die Höhe des ersten Kurvenmaximums stellen ein Maß für die vorliegenden Kräfteverhältnisse im Schwingungssystem $c_1$, $m_1$, $D_2$ dar.

Die ausgezogenen Kurvenzüge der Fig. 6a und 6b im Bereich der Phase 1 stellen die Summenkurve dar, die sich aus dem Schwingungsverhalten, welches dem Federverhalten des Reifens entspricht und dem Schwingungsverhalten des Systems $m_2$, $c_2$, ergibt.

Bei einer weichen Federung, also bei einer weichen Feder $c_1$ mit weichem Stoßdämpfer 4, stellt man am Schwingungsbeginn zunächst das vorstehend beschriebene Schwingungsverhalten der Feder $c_2$ fest. Die Anstiegsflanke der Grundschwingungskurve (in Fig. 6b) ist lang und nicht sehr steil. Die erste Schwingungsamplitude verläuft relativ flach und die Zeitspanne bis zum Eintritt des ersten Schwingungsmaximums ist relativ lang, wenn man den in Fig. 6b gezeigten Schwingungsverlauf (weiches Federsystem) mit der in Fig. 6a gezeigten Kurve (hartes Federsystem) vergleicht.

Bei einem harten Federsystem $c_1$, $D_2$ wird der Einschwingvorgang im wesentlichen unterdrückt, da die harte Feder $c_1$ eine mehrfache Schwingung der Feder $c_2$ verhindert. Der Schwingungsbeginn liegt geringfügig später als bei einem weichen System, da das Rad 3 mit der Masse $m_2$ nicht so stark von der sich entspannenden Feder $c_1$ beschleunigt wird. Der Kurvenanstieg ist steil, die erste Amplitude ist hoch und wird innerhalb kurzer Zeit erreicht. Aus diesen ersten Kurvenabschnitten lassen sich folgende Folgerungen ziehen: langsamer Grundkurvenanstieg bei weicher Federung bedeutet hoher Fahrkomfort; steiler Anstieg der Grundkurve bei harter Federung bedeutet geringer Fahrkomfort. Die Güte des Stoßdämpfers 4 ergibt sich aber aus dem Verlauf der Bodendruckkurve während der 1. Phase, in der die Grundschwingung der Karosserie 1 durch das Federverhalten des Rades 3 überlagert ist.

Mit Hilfe des beschriebenen Meßsystems ist es also möglich geworden, durch Analyse des Bodendruckes der Wiegeplatte 15 die Charakteristik des Stoßdämpfers aus dem Gesamtschwingungsverhalten des Kraftfahrzeuges zu eliminieren und eine klare Aussage über die Güte des Stoßdämpfers zu machen, ohne diesen ausbauen zu müssen.

Aufgrund der für jedes Fahrzeug bekannten Werte $m_1$, $m_2$, $c_1$, $c_2$, ist es möglich, theoretische Schwingungskurven aufzustellen und mit den experimentell tatsächlich ermittelten Kurven zu vergleichen.

In der Praxis wird man hier allerdings die für die Ermittlung der theoretischen Kurven erforderlichen Daten einem Computer eingeben, der in der Lage ist, die experimentell ermittelten Kurven punktweise mit den theoretischen Kurven zu vergleichen und, entsprechend dem eingegebenen Programm, Fehler, die über dem zulässigen Kriterium liegen, zu melden.

## Patentansprüche

1. Verfahren zur Überprüfung des Fahrwerkzustandes eines Kraftfahrzeuges, bei dem das Kraftfahrzeug auf eine im Abstand über einer Unterlage (15) angeordnete Auffahrhalterung (10) gebracht und anschließend die Auffahrhalterung (10) entfernt wird, so daß das Kraftfahrzeug mit seiner Vorder- bzw. Hinterachse im freien Fall auf die Unterlage auffällt, *dadurch gekennzeichnet*, daß

1. der Abstand zwischen der Auffahrhalterung (10) und der Unterlage (15), welcher der Fallhöhe des Kraftfahrzeuges entspricht, so gewählt wird, daß er im wesentlichen dem durch die Konstruktion des Kraftfahrzeuges vorgegebenen Restausfederungsweg also dem Abstand zwischen Radachse und Pufferanschlag, entspricht, diesen jedoch nicht übersteigt,
2. die Auffahrhalterung (10) mindestens so schnell entfernt wird, wie das oder die jeweils zu prüfenden Räder (3) des Kraftfahrzeuges unter Wirkung der Schwerkraft und gleichzeitiger Wirkung der zwischen Rad (3) und Karosserie (1) befindlichen sich entspannenden Feder (2) unter Vernachlässigung der entgegengesetz gerichteten Wirkung des Stoßdämpfers (4) und der Reibungskräfte, beispielsweise im Achsgelenklager (5) und in den Federn fallen würde und
3. der zeitliche Verlauf der auf die Unterlage (15) einwirkenden Kraft gemessen wird.

2. Verfahren nach Anspruch 1, *dadurch gekenn*-

*zeichnet*, daß bei einem Kraftfahrzeug mit Einzelradaufhängung die Unterlage (15) durch daß auf diese auftreffende Rad (3) nach Maßgabe seines durch seine Aufhängung in den Achslagern (5) und durch das Schwingungsverhalten der Karosserie (1) vorgegebenen Schwingungsverhaltens in horizontaler Richtung bewegt wird.

3. Verfahren nach Anspruch 1 oder 2, *dadurch gekennzeichnet*, daß der Abstand zwischen der Auffahrhalterung (10) und der Unterlage (15) zwischen 10 und 60 mm, vorzugsweise 50 mm beträgt.

4. Verfahren nach einem der Ansprüche 1 bis 3, *dadurch gekennzeichnet*, daß die Unterlage (15) durch das Auftreffen des Rades (3) zu einer Schwingung angeregt wird.

5. Vorrichtung zur Überprüfung des Fahrwerkzustandes eines Kraftfahrzeuges mit einer im Abstand über einer Unterlage (15) angeordneten, unter dem aufgefahrenen Kraftfahrzeug entfernbaren Auffahrhalterung (10), so daß das Kraftfahrzeug mit seiner Vorder- bzw. Hinterachse im freien Fall auf die Unterlage auffällt und mit einer Meßvorrichtung (13) zur Bestimmung des Fahrzeuggewichtes und der auf die Unterlage wirkenden Radkraft, *dadurch gekennzeichnet*, daß die Unterlage (15) als Meßbrücke (13) ausgebildet ist, mit der das Fahrzeuggewicht und der zeitliche Verlauf der Radkraft bestimmbar ist und daß der Abstand der Fahrzeughalterung (10) von der Unterlage (15) im wesentlichen der durch den Restausfederungsweg des Kraftfahrzeuges vorgegebenen Strecke entspricht, diese jedoch nicht übersteigt.

6. Vorrichtung nach Anspruch 5, *dadurch gekennzeichnet*, daß die Meßbrücke (13) als eine statische Waage ausgebildet ist, mit der unabhängig von der Auftreffstelle des Rades (3) auf der Unterlage (15) das Gewicht des Kraftfahrzeuges bestimmbar ist und daß die Meßbrücke (13) eine weitere Meßvorrichtung enthält zur Bestimmung der zeitlichen Änderung der Bodenkraft.

7. Vorrichtung nach Anspruch 6, *dadurch gekennzeichnet*, daß der Verlauf der Bodenkraft mittels Dehnungsmeßstreifen (18) erfaßt wird.

8. Vorrichtung nach einem der Ansprüche 5 bis 7, *dadurch gekennzeichnet*, daß die Meßbrücke (13) auf einer Bodenplatte (17) gelagert und auf dieser in horizontaler Richtung, mindestens nach einer Seite, beweglich ist.

9. Vorrichtung nach einem der Ansprüche 5 bis 8, *dadurch gekennzeichnet*, dein die Fahrzeughalterung (10) mit einem vorgespannten Federelement (14) verbunden ist, welches diese nach Lösung der Fahrzeughalterung mit einer mindestens der Geschwindigkeit des Rades (3), vorzugsweise mit einer größeren Geschwindigkeit, unter dem Rad entfernt.

10. Vorrichtung nach einem der Ansprüche 5 bis 9, *dadurch gekennzeichnet*, daß die Fahrzeughalterung (10) eine Aussparung aufweist, deren Abmessungen die Ausmaße der unter der Aussparung angeordneten Meßbrücke (13) etwas übersteigen.

11. Vorrichtung nach einem der Ansprüche 5 bis 10, *dadurch gekennzeichnet*, daß die Meßbrücke (13) federnd (bei 22) gelagert ist.

12. Vorrichtung nach einem der Ansprüche 5 bis 11, *dadurch gekennzeichnet*, daß die Meßbrücke (13) Schwingungen bis mindestens 1 kHz erfaßt.

13. Vorrichtung nach einem der Ansprüche 5 bis 12, *dadurch gekennzeichnet*, daß eine Bremsvorrichtung (23) für die Fahrzeughalterung (10) vorgesehen ist, um diese, nachdem sie durch Lösung ihrer Arretierung unter dem Rad entfernt worden ist, am Zurückfedern zu hindern.

## Claims

1. A method of testing the condition of the chassis of a powered vehicle, in which the powered vehicle, brought up on to a drive-on support (10) (on the ramp 11) arranged at a spacing above a base plate (15) and subsequently the drive-on support (10) is removed, so that the powered vehicle is dropped on to the base plate in free fall with its front and/or rear axle, characterised in that

1.  the spacing between the drive-on support (10) and the base plate (15), which spacing corresponds to the drop height of the powered vehicle, is selected so that it substantially corresponds to but does not exceed the residual suspension path, i. e. the spacing between the wheel axle and the stop, said path being predetermined by the design of the powered vehicle,
2.  the drive-on support (10) is removed at least as quickly as the wheel or wheels (3), which are to be tested, of the powered vehicle, in each case would drop under the action of gravity and at the same time under the untensioning action of the springs (2) which are located between the wheel (3) and the bodywork (1) , while neglecting the oppositely directed action of the shock absorber (4) and of the friction, for example in the linkage (5) and in the springs,
3.  the time curve for the force acting on the base plate (15) is measured.

2. A method according to claim 1, characterised in that in a powered vehicle with independent wheel suspension the base plate (15) is moved horizontally by the wheel (3) which meets it, in accordance with its resonance characteristics which are predetermined by its suspension in the axle bearings (5) and by the resonance characteristics of the bodywork (1).

3. A method according to claim 1 or 2, characterised in that the spacing between the drive-on support (10) and the base plate (15) amounts to between 10 and 60 mm, preferably 50 mm.

4. A method according to any one of claims 1 to 3, characterised in that the base plate (15) is excited into resonance by the impingement of the wheel (3).

5. A device for testing the condition of the chassis of a powered vehicle, with a drive-on support (10) arranged at a spacing above a base plate (15) and removable from under the vehicle which has been driven on to it, so that the powered vehicle drops on to the base plate in free fall with its front and/or rear axle, and having a measuring device (13) for determining the weight of the vehicle and the force acting on the base plate, characterised in that the base plate (15) is formed as a measuring bridge (13), with which the weight of the vehicle and the time curve of the force of the wheel may be determined, and that the spacing of the vehicle support (10) from the base plate (15) substantially corresponds to but does not exceed the extent predetermined by the residual suspension path of the powered vehicle.

6. A device according to claim 5, characterised in that the measuring bridge (13) is formed as a static weighting device, with which the weight of the powered vehicle may be determined irrespective of where the wheel (3) meets the base plate (15) and that the measuring bridge (13) contains a further measuring device for determining the time change of the base reaction force.

7. A device according to claim 6, characterised in that the curve for the base reaction force is detected with the aid of strain gauges (18).

8. A device according to any one of claims 5 to 7, characterised in that the measuring bridge (13) is mounted on a base (17) and movable thereon horizontally, at least towards one side.

9. A device according to any one of claims 5 to 8, characterised in that the vehicle support (10) is connected to a pre-tensioned spring element (14), said element removing said support under the wheel, after release of the vehicle support, at a speed at least equal to and preferably greater than the speed of the wheel (3).

10. A device according to any one of claims 5 to 9, characterised in that the vehicle support (10) has a recess, the dimensions of which slightly exceed the extent of the measuring bridge (13) which is arranged under the recess.

11. A device according to any one of claims 5 to

10, characterised in that the measuring bridge (13) is resiliently mounted (at 22).

12. A device according to any one of claims 5 to 11, characterised in that the measuring bridge (13) detects resonance up to at least 1 kHz.

13. A device according to any one of claims 5 to 12, characterised in that a brake device (23) for the vehicle support (10) is provided, in order to prevent it from springing back after it has been removed under the wheel by loosening its stop.

**Revendications**

1. Procédé de contrôle de l'état du train de roulement d'un véhicule automobile, dans lequel le véhicule automobile est placé sur une fixation de soulèvement (10) disposée à distance au-dessus d'un support (15) et la fixation de soulèvement (10) étant ensuite éloignée, de sorte que le véhicule-automobile tombe dans une chute libre par son essieu avant ou son essieu arrière sur le support, caractérisé en ce que:

1. la distance entre la fixation de soulèvement (10) et le support (15), qui correspond à la hauteur de chute du véhicule-automobile, est choisie de façon à correspondre pratiquement au débattement résiduel prédéterminé par la construction du véhicule automobile, donc à la distance entre l'essieu et la butée tampon, en ne dépassant toutefois pas cette valeur;

2. la fixation de soulèvement (10) est enlevée au moins aussi rapidement que tomberai(en)t la ou les roues (3) à contrôler du véhicule automobile, sous l'effet de la pesanteur et sous l'effet simultané du ressort (2) se détendant, se trouvant entre la roue (3) et la carrosserie (1), en négligeant l'effet orienté en sens opposé de l'amortisseur (4) et des efforts de frottement, par exemple dans le palier d'articulation d'essieu (5) et dans le ressort, et

3. l'évolution temporelle de la force agissant sur le support (15) est mesurée.

2. Procédé selon la revendication 1, caractérisé en ce que dans un véhicule automobile à suspension indépendante, le support (15) est déplacé en direction horizontale par la roue (3) arrivant sur lui, selon la valeur de son comportement vibratoire prédéterminé, du fait de sa suspension dans les paliers d'essieu (5), et du fait du comportement vibratoire de la carrosserie (1).

3. Procédé selon la revendication 1 ou 2, caractérisé en ce que la distance entre la fixation de soulèvement (10) et le support (15) est comprise entre 10 et 60 mm, étant de préférence de 50 mm.

4. Procédé selon l'une des revendications 1 à 3, caractérisé en ce que le support (15) est excité en vibration par l'impact de la roue (3).

5. Dispositif de contrôle de l'état du train de roulement d'un véhicule automobile, avec une fixation de soulèvement (10), susceptible d'être éloignée en-dessous du véhicule automobile, disposée au-dessus d'un support (15), de façon que le véhicule automobile tombe dans une chute libre par son essieu avant ou son essieu arrière sur le support, et comportant un dispositif de mesure (13) destiné à déterminer le poids du véhicule et l'effort de la roue agissant sur le support, caractérisé en ce que le support (15) est réalisé sous la forme d'un pont de mesure (13), à l'aide duquel le poids du véhicule et l'évolution temporelle de l'effort de la roue peuvent être déterminés et en ce que la distance entre fixation du véhicule (10) et support (15) correspond pratiquement à la course prédéterminée par le débattement résiduel du véhicule, en ne dépassant toutefois pas cette dernière.

6. Dispositif de contrôle selon la revendication 5, caractérisé en ce que le pont de mesure (13) est réalisé sous la forme d'une balance statique à l'aide de laquelle on peut déterminer le poids du véhicule automobile, indépendamment du point d'impact de la roue (3) sur le support (15) et en ce que le pont de mesure (13) contient un dispositif de mesure supplémentaire destiné à la détermination de la variation temporelle de l'effort au sol.

7. Dispositif de contrôle selon la revendication 6, caractérisé en ce que l'évolution de l'effort au sol est capté à l'aide de jauges extensométriques (18).

8. Dispositif de contrôle selon l'une des revendications 5 à 7, caractérisé en ce que le pont de mesure (13) est monté sur une plaque de base (17) et qui est mobile sur cette dernière, en direction horizontale, au moins sur un côté.

9. Dispositif de contrôle selon l'une des revendications 5 à 8, caractérisé en ce que la fixation du véhicule (10) est reliée à un élément élastique (14) précontraint, qui est éloigné au-dessous de la roue, après désolidarisation de la fixation de véhicule, avec au moins la vitesse de la roue (3), de préférence avec une vitesse supérieure.

10. Dispositif de contrôle selon l'une des revendications 5 à 9, caractérisé en ce que la fixation du véhicule (10) présente un évidement dont les dimensions dépassent un peu la dimension extérieure du pont de mesure (13) disposé sous l'évidement.

11. Dispositif de contrôle selon l'une des revendications 5 à 10, caractérisé en ce que le pont de mesure (13) est monté élastiquement (en 22).

12. Dispositif de contrôle selon l'une des revendications 5 à 11, caractérisé en ce que le pont de mesure (13) capte des vibrations allant au moins jusqu'à 1 kHz.

13. Dispositif de contrôle selon l'une des revendications 5 à 12, caractérisé en ce qu'il est prévu un dispositif de freinage (23) destiné à la fixation du véhicule (10), afin d'empêcher celle-ci de rebondir après qu'elle ait été éloignée au-dessous de la roue par désolidarisation de son blocage.

Fig.1

Fig. 2

Fig. 3

mm

m 2

m 1

Fig.4

)mm

| Zug | | Druck | Zug | Druck | Neutral |
|-----|---|-------|-----|-------|---------|

Fig.5

N

Phase 1    Phase 2

Fig.6a

N

Phase 1    Phase 2

Fig.6b